Europäisches Patentamt

(19) **European Patent Office**

**Office européen des brevets**

(11) Numéro de publication: **0 188 955**
**B1**

(12) **FASCICULE DE BREVET EUROPEEN**

(45) Date de publication du fascicule du brevet:
**26.04.89**

(21) Numéro de dépôt: **85402563.2**

(22) Date de dépôt: **19.12.85**

(51) Int. Cl.⁴: **B01D 53/30,** C10K 1/14,
C07C 9/04

(54) **Dispositif de régulation de la charge d'amine sur une colonne d'épuration du gaz naturel.**

(30) Priorité: **21.12.84 FR 8419616**

(43) Date de publication de la demande:
**30.07.86 Bulletin 86/31**

(45) Mention de la délivrance du brevet:
**26.04.89 Bulletin 89/17**

(84) Etats contractants désignés:
**AT BE CH DE GB IT LI LU NL SE**

(56) Documents cités:
**US-A- 2 321 929**
**US-A- 3 917 931**
**US-A- 4 106 916**
**US-A- 4 172 880**

(73) Titulaire: **SOCIETE NATIONALE ELF AQUITAINE
(PRODUCTION), Tour Elf 2, Place de la Coupole La
Défense 6, F-92400 Courbevoie(FR)**

(72) Inventeur: **Baritiu, Georges-Michel, 47 rue du Maréchal
Foch, F-78000 Versailles(FR)**
Inventeur: **Gherardi, Jean-Claude, Avenue des Fleurs
Lotissement du Plateau, F-64170 Artix(FR)**
Inventeur: **Leconte, Bernard, 6 Cité Dufau,
F-64170 Artix(FR)**

(74) Mandataire: **Boillot, Marc et al, SOCIETE NATIONALE
ELF AQUITAINE Division Propriété Industrielle Tour Elf,
F-92078 Paris la Défense Cédex 45(FR)**

ACTORUM AG

## Description

L'invention concerne un dispositif de régulation de la charge d'amine sur une colonne d'absorption utilisée pour l'épuration d'un gaz renfermant des composés acides tels que $H_2S$ par ladite amine.

Le procédé d'épuration à l'aide d'amine, de gaz renfermant de l'hydrogène sulfuré est bien connu de l'homme de l'art. Selon ce procédé, le gaz à épurer est injecté au fond d'une colonne d'absorption dans laquelle il est mis en contact à contre-courant avec une solution d'amine. Le gaz épuré est récupéré en tête de colonne et l'amine chargée de sulfure d'hydrogène sort en bas de la colonne, pour être régénérée et réinjectée dans la colonne d'absorption.

Le problème qui se pose est celui de la régulation du débit d'amine compte tenu des conditions de fonctionnement. On peut, comme dans le brevet français 2 141 413, asservir le débit massique de la solution d'amine au débit massique du gaz à épurer. Il est également possible, comme décrit dans le brevet US 3 288 706 d'analyser le gaz à la sortie de la colonne d'absorption (une fois épuré) ou l'amine saturée au bas de la colonne.

Ces différentes méthodes de régulation présentent l'inconvénient majeur de s'appuyer sur des paramètres extérieurs à la colonne:

— en particulier pour le premier brevet, se fier à des éléments préexistants à la réaction proprement dite et ne pouvant donc prendre en compte le comportement proprement dit de la réaction,

— pour le second brevet, de constater a posteriori le résultat de la réaction et donc de réagir avec un temps de retard.

On n'est donc pas à l'abri d'un éventuel déréglage ou d'une surcharge de la colonne, due à un décalage des mesures par rapport aux réactions d'absorption et/ou à un manque de précision et temps de réponse variable des appareils.

La présente invention propose un dispositif de régulation de la charge d'amine sur une colonne d'absorption, qui permet de remédier aux inconvénients précités.

Le dispositif suivant l'invention pour réguler la charge d'amine sur une colonne d'absorption, qui est utilisée pour l'épuration d'un gaz renfermant des composés acides tels que $H_2S$ par ladite amine et présente un conduit d'amenée d'amine régénérée sur lequel sont montées, dans le sens de circulation de l'amine, une pompe puis une vanne automatique, est du type comportant un analyseur d'amine, qui est adapté pour déterminer le taux de composé acide dans l'amine et le comparer à un taux de consigne et fournir un signal de correction de consigne de débit, un module d'addition recevant un signal de consigne de débit et d'autre part le signal fourni part l'analyseur et produisant un signal représentatif de leur somme et un régulateur recevant d'une part le signal de sortie d'un débitmètre, monté sur le conduit d'amenée de l'amine régénérée entre la pompe et la vanne automatique, et d'autre part le signal délivré par le module d'addition et agissant sur la vanne automatique ou la pompe et il se caractérisé en ce que l'analyseur comprend un analyseur optique comportant une cellule de mesure agencée pour mesurer le taux d'absorption de composé acide dans l'amine dans les conditions de pression et de température de la colonne d'absorption et avec un trajet optique réglable et en ce qu'un piquage est monté sur la colonne d'absorption pour avoir une extrémité débouchant dans la phase liquide à l'intérieur de la colonne et l'autre extrémité reliée à l'analyseur par un conduit.

Avantageusement, l'analyseur optique est un photomètre, ce dernier ayant de préférence une cellule de mesure comprenant deux cylindres de quartz dont l'espacement, qui détermine le trajet optique, est réglable.

L'analyseur du dispositif suivant l'invention permet d'analyser l'amine dans laquelle est absorbé le sulfure d'hydrogène et autres composés acides, au cœur même de la colonne.

Les avantages obtenus grâce à l'invention sont très importants. En premier lieu la mesure in-situ du taux d'absorption de l'$H_2S$ et autres composés acides sur l'amine permet de réguler la charge d'amine au moment même où la réaction s'éloigne d'un taux prédéterminé. En particulier, de cette manière, on évite tout risque de torchage ou du moins on en diminue la fréquence. De plus, on obtient une stabilité quasi parfaite du fonctionnement, d'où un gain d'énergie sur le pompage de la charge d'une part, sur la régénération de l'amine d'autre part.

On peut compléter cette régulation en lui associant un enregistrement des températures tout au long de l'absorbeur et lui associer une régulation a priori, par un dispositif électronique, pour améliorer encore la gestion économique du procédé.

L'invention sera mieux comprise à la lecture de la description d'un mode de réalisation non limitatif, description faite en référence aux dessins annexés où:

— la figure 1 représente partiellement une installation de désulfuration d'un gaz renfermant $H_2S$, équipée d'un dispositif de régulation selon l'invention pour lequel l'analyseur optique est un photomètre,

— la figure 2 est une vue de détail de la cellule de mesure du photomètre de l'analyseur dudit dispositif.

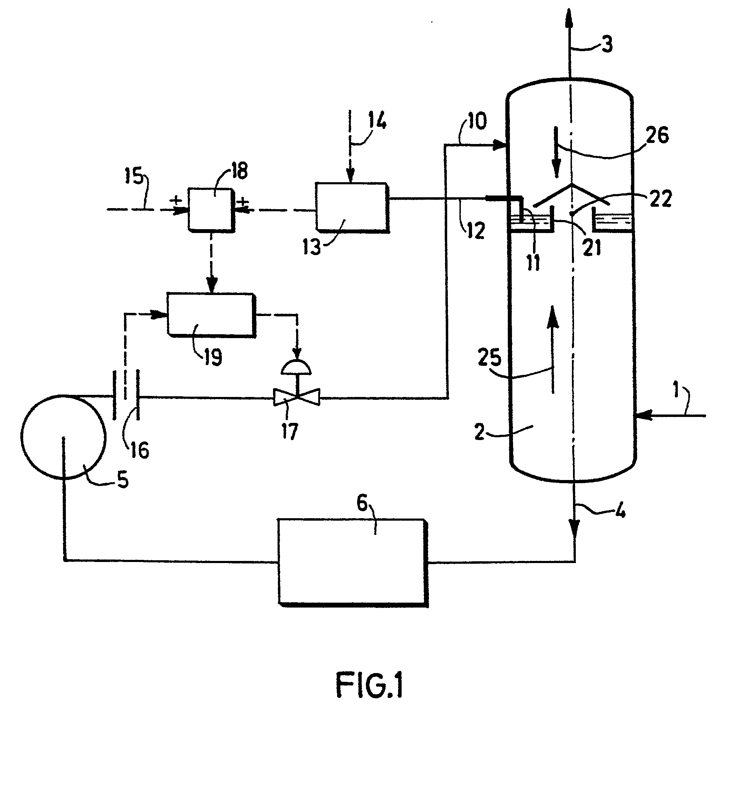

On a représenté sur la figure 1 une installation de désulfuration de gaz comprenant une colonne d'absorption (2), des conduites de charge ou d'évacuation (1), (3), (4) et (10), une pompe de charge de l'amine (5), une unité de régénération (6), un dispositif de piquage (11) et un système de régulation constitué de l'analyseur (13), du module d'addition (18) et du régulateur (19), d'un débitmètre (16) et d'une vanne automatique (17).

En se référant à cette figure 1, le gaz à épurer (25) contenant de l'hydrogène sulfuré et éventuellement d'autres composés acides arrive par la conduite (1) et pénètre au fond de la colonne (2) dans laquelle il est mis en contact à contre-courant avec une solution d'amine concentrée et chaude (26) introduite par la conduite (10). Le gaz épuré sort en tête de l'absorbeur par la conduite (3) et la solution d'amine, ayant fixé les composés acides, est dirigée par l'intermédiaire de la conduite (4) vers une unité de régénération (6). L'amine une fois régénérée est repompée par la pompe de charge (5) pour être ensuite réinjectée dans l'absorbeur.

Pour la régulation du débit d'amine, on réalise un piquage (11) débouchant dans la phase liquide (21) au niveau de l'un des plateaux (22) de l'absorbeur. L'échantillon est acheminé par l'intermédiaire d'une conduite (12) où a été prévu un système de sécurité vis-à-vis de la pression vers l'analyseur (13). Ledit analyseur comprend un photomètre dont la cellule est capable de résister à de fortes pressions, des températures élevées et permet de faire des mesures sur des trajets optiques très courts et réglables. La mesure, après amplification réglable, du taux de saturation de l'amine est comparée à une consigne (14) préalablement fixée, et vient modifier en l'augmentant ou en la diminuant, une consigne de débit (15), grâce à un module d'addition (18). Le signal de sortie du module (18) vient piloter le point de consigne de la boucle de régulation de débit constituée du débitmètre (16), du régulateur (19) et de la vanne automatique (17).

De plus, pour confirmer l'évolution de la mesure donnée par l'analyseur (13), on peut effectuer un suivi des températures prises sur un ou plusieurs plateaux, toujours dans la phase liquide, ce qui permet de visualiser le déplacement du front d'absorption au sein de la colonne.

Un autre mode de réalisation du contrôle du débit d'amine consiste à agir non sur la vanne (17), mais sur la vitesse de la pompe (5), par exemple en contrôlant l'admission vapeur d'une turbine d'entraînement ou la vitesse d'un moteur électrique par tout moyen approprié.

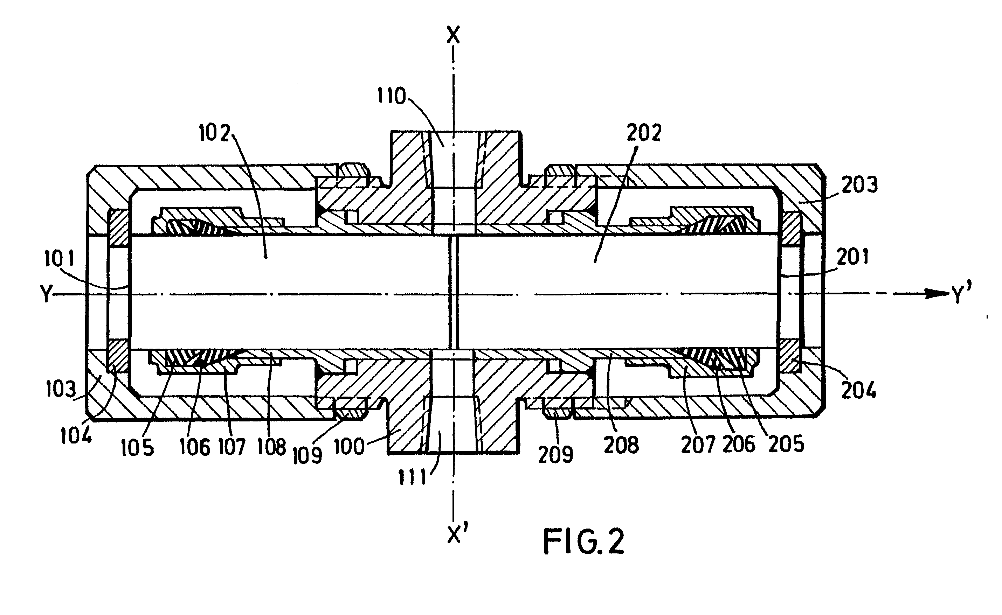

En référence à la figure 2, la cellule du photomètre est symétrique par rapport à un plan passant par l'axe X'X et perpendiculaire à l'axe optique YY'. Elle présente également une symétrie de révolution autour de l'axe YY'. La cellule comprend deux cylindres de quartz (102) et (202), leur diamètre correspond au diamètre intérieur de deux corps (108) et (208) eux-mêmes emboîtés et soudés dans la cavité cylindrique intérieure d'un corps principal (100). Sur chacun des corps (108) et (208) vient se visser une douille (107) (respectivement (207)) en coinçant contre le cylindre de quartz correspondant un joint (105) (respectivement (205)) et un joint (106) (respectivement (206)) en forme de biseau. La pointe du biseau dudit joint (106) (respectivement (206)) est coincée entre le quartz et l'extrémité du corps (108) (respectivement (208)) qui est taillée en biseau en sens inverse. De même, la pointe du biseau du joint (105) (respectivement (205)) est coincée entre le quartz et l'autre extrémité du joint (106) (respectivement (206)) qui est taillée en biseau en sens inverse. Ces joints (105) et (106) (resp. (205) et (206)) sont en polytétrafluoroéthylène (TEFLON ®) et assurent l'étanchéité à la pression. Ces deux quartz étant positionnés de manière à obtenir le trajet optique voulu (distance inter-quartz), on fixe leur position par serrage des douilles (107) et (207) sur les corps (108) et (208), après introduction d'une cale d'épaisseur convenable par l'un des orifices (110) ou (111). Cette étanchéité est complétée par l'anneau en polytétrafluoroéthylène (104) (resp. (204)) qui est appliqué contre le fond du cylindre de quartz (101) (resp. (201)) par vissage du culot (103) (resp. (203)) sur le corps principal. Ce vissage est rendu indéréglable en bloquant le contre-écrou (109) contre le culot (103).

On obtient ainsi une étanchéité parfaite à la pression et à la température avec un trajet optique aussi court que l'on veut. Le produit à analyser entre par l'orifice (110) d'axe XX' ménagé dans le corps principal, passe entre les deux cylindres de quartz qui déterminent le trajet optique et ressort par l'orifice (111) également d'axe XX'.

L'invention n'est pas limitée au seul mode de réalisation décrit ci-dessus, bien au contraire elle en englobe toutes les variantes.

En particulier, il est possible d'envisager l'isolement de l'installation de photométrie, en cas de fuite ou de réglage de la cellule. Pour cela, on peut utiliser un système de vannes susceptibles de court-circuiter l'entrée et la sortie du photomètre et dont l'action serait déclenchée automatiquement: par exemple à l'apparition d'une fuite.

**Revendications**

1. Dispositif de régulation de la charge d'amine sur une colonne (2) d'absorption, qui est utilisée pour l'épuration d'un gaz renfermant des composés acides et notamment $H_2S$ par ladite amine et présente une conduite (10) d'amenée d'amine régénérée sur laquelle sont montées, dans le sens de circulation de l'amine, une pompe (5) puis une vanne (17) automatique, ledit dispositif comportant un analyseur (13) d'amine, qui est adapté pour déterminer le taux de composé acide dans l'amine et le comparer à un taux de consigne (14) et fournir un signal de correction de consigne de débit, un module d'addition (18) recevant un signal (15) de consigne de débit et d'autre part le signal fourni par l'analyseur et produisant un signal représentatif de leur somme et un régulateur (19) recevant d'une part le signal de sortie d'un débitmètre (16), monté sur la conduite (10) entre la pompe (5) et la vanne (17), et d'autre part le signal délivré par le module (18) d'addition et agissant sur la vanne (17) ou la pompe (5), et se caractérisant en ce que l'analyseur (13) comprend un analyseur optique comprenant une cellule de mesure agencée pour mesurer le taux d'absorption de composé acide dans l'amine dans les conditions de pression et de température de la colonne d'absorption et avec un trajet optique réglable, et en ce qu'un piquage (11) est monté sur la colonne (2) pour avoir une extrémité débouchant dans la phase liquide (21) à l'intérieur de la colonne (2) et l'autre extrémité reliée à l'analyseur (13) par un conduit (12).

2. Dispositif de régulation selon la revendication 1, caractérisé en ce que l'analyseur optique est un photomètre.

3. Dispositif de régulation selon la revendication 2, caractérisé en ce que le photomètre possède une cellule de mesure comprenant deux cylindres de quartz (102, 202) dont l'espacement, qui détermine le trajet optique, est réglable.

4. Dispositif selon la revendication 3, caractérisé en ce que chacun des deux cylindres (102, 202) de quartz est inséré dans un corps cylindrique (108, 208), dont le diamètre intérieur correspond au diamètre extérieur du quartz, et est maintenu, d'une part tangentiellement par une douille (107, 207) qui se visse sur ledit corps en coinçant au moins un joint (105, 106) en TEFLON en forme de biseau contre le quartz et l'extrémité dudit corps taillé en biseau en sens inverse, et d'autre part axialement par vissage d'un culot (103) ou (203) sur un corps principal (100), ledit culot appliquant un joint (104, 204) contre la paroi extérieure plane (101, 201) du quartz.

5. Dispositif selon la revendication 4, caractérisé en ce que le corps principal (100) est percé respectivement d'un orifice (110) d'entrée et d'un orifice (111) de sortie pour l'amine à analyser, lesdits orifices étant disposés en regard de l'espace séparant les deux cylindres de quartz (102, 202).

**Patentansprüche**

1. Steuervorrichtung für die Aminzufuhr an einer Absorbtionskolonne (2), die zur Reinigung eines Gases, das Säureverbindungen und insbesondere H₂S enthält, durch das Amin verwendet wird und eine Zuführleitung (10) für regeneriertes Amin aufweist, an der im Umlaufsinn des Amins eine Pumpe (5) und dann ein automatisches Ventil (17) angebracht sind, wobei die Vorrichtung einen Aminanalysator (13), der dazu geeignet ist, den Anteil der Säureverbindung in dem Amin zu bestimmen und ihn mit einem Sollwert (14) zu vergleichen und ein Solldurchsatz-Korrektursignal zu liefern, ein Additionsmodul (18), das ein Einstellmengensignal (15) und andererseits das von dem Analysator abgegebene Signal empfängt und ein, deren Summe entsprechendes Signal erzeugt, und einen Regler (19) aufweist, der einerseits das Ausgangssignal eines in der Leitung zwischen der Pumpe (5) und dem Ventil (17) angebrachten Durchsatzmessers (16) und andererseits das von dem Additionsmodul (18) gelieferte Signal empfängt, und auf das Ventil (17) oder die Pumpe (5) wirkt, dadurch gekennzeichnet, daß der Analysator (13) einen optischen Analysator mit einer Meßzelle aufweist, die zum Messen des Absorbtionsgrads der Säureverbindung in dem Amin unter den Druck- und Temperaturbedingungen der Absobtionskolonne ausgelegt ist und mit einer regelbaren optischen Strecke versehen ist, und daß eine Abzweigung (11) an der Kolonne (2) so angebracht ist, daß ein Ende in die flüssige Phase (21) im Inneren der Kolonne (2) einmündet und das andere Ende mit dem Analysator (13) über eine Leitung (12) verbunden ist.

2. Steuervorrichtung nach Anspruch 1, dadurch gekennzeichnet, daß der optische Analysator ein Photometer ist.

3. Steuervorrichtung nach Anspruch 2, dadurch gekennzeichnet, daß das Photometer eine Meßzelle besitzt, die zwei Quartz-Zylinder (102, 202) aufweist, deren Zwischenraum, der die optische Strecke bestimmt, regulierbar ist.

4. Vorrichtung nach Anspruch 3, dadurch gekennzeichnet, daß jeder der zwei Quartz-Zylinder (102, 202) in einen zylindrischen Körper (108, 208) eingesetzt ist, dessen Innendurchmesser dem Außendurchmesser des Quartzes entspricht, und einerseits tangentiell durch eine Buchse (107, 207), die sich auf den Körper schraubt, wobei sie wenigstens einen, zu dem Quartz hin abgeschrägten Teflon-Verbinder (105, 106) und das in entgegengesetztem Sinn schräg abgeschnittene Ende des Körpers verkeilt, und andererseits axial durch eine Verschraubung eines Sockels (103) oder (203) mit einem Hauptkörper (100) gehalten ist, wobei der Sockel ein Verbindungsstück (104, 204) gegen die äußere ebene Wand (101, 201) des Quartzes andrückt.

5. Vorrichtung nach Anspruch 4, dadurch gekennzeichnet, daß durch den Hauptkörper (100) eine Einlaßöffnung (110) bzw. eine Auslaßöffnung (111) für das zu analysierende Amin gebohrt ist, wobei die Öffnungen gegegnüber dem Raum angeordnet sind, der die zwei Quartz-Zylinder (102, 202) trennt.

**Claims**

1. Apparatus for adjusting the amine load upon an absorption column (2), which is used for scrubbing a gas containing acid compounds and in particular H₂S with the said amine and comprises a supply pipe (10) for regenerated amine on which are mounted, in the direction of the amine flow, a pump (5) and an automatic valve (17), the said apparatus comprising an amine analyser (13) which is adapted to determine the amount of acid compound in the amine and compare it with a set value (14) and to generate a signal representative of a correction of a reference flowrate, an addition module (18) receiving a signal (15) representative of a reference flow-rate and the signal from the analyser and producing a signal representative of their sum, and a regulator (19) receiving both the output signal from a flow-rate meter (16) which is arranged on the pipe (10) between the pump (5) and the valve (17), and the signal supplied by the addition module (18) and acting on the valve (17) or the pump (5), which apparatus being characterised in that the analyser (13) comprises an optical analyser provided with a measuring cell adapted for measuring the absorption of the acid compound present in the amine in the pressure and temperature conditions prevailing in the absorption column and with an adjustable optical path, and in that a tapping duct (11) is mounted on the column (2) so as to have one of its ends opening in the liquid phase (21) inside the column (2) and the other end connected to the analyser (13) through a duct (12).

2. Apparatus according to claim 1, characterised in that the optical analyser consists of a photometer.

3. Apparatus according to claim 2, characterised in that the photometer includes a measuring cell comprising two quartz cylinders (102, 202) with an adjustable spacing therebetween, the said spacing defining the optical path.

4. Apparatus according to claim 3, characterised in that each of the two quartz cylinders (102, 202) is inserted in cylindrical body (108, 208), the internal diameter of which matches the external diameter of the quartz cylinder, and is maintained on the one hand tangentially by means of a socket (107, 207), which is screwed on the said body while wedging at least one bevelled polytetrafluoroethylene joint (105, 106) between the quartz cylinder and the end of the said body bevelled in the opposite direction, and on the other hand axially by means of a base (103) or (203) screwed on a main body (100), the said base applying a seal (104, 204) against the distal end (101, 201) of the quartz cylinder.

5. Apparatus according to claim 4, characterised in that the main body (100) is provided respectively with an inlet opening (110) and an outlet opening (111) for the amine to be analysed, the said openings facing the space separating the two quartz cylinders (102, 202).

FIG.2

EP 0 188 955 B1